# EUROPEAN PATENT SPECIFICATION

(11) **EP 3 257 658 B1**
(45) Date of publication and mention of the grant of the patent: **15.09.2021**
(21) Application number: 15881682.7
(22) Date of filing: 20.05.2015
(51) Int. Cl.: B29C 64/153, B33Y 80/00, B33Y 10/00, B33Y 70/00, C08G 18/66, C08G 18/76, C08G 18/24, C08G 18/30, C08G 18/32, C08G 18/48, C08L 63/00, C08L 75/08, B29B 11/16, B29C 70/12, C08L 77/02, B29B 11/00, B29C 35/08, B29C 59/02, B29K 101/10

(54) **METHOD FOR MANUFACTURING COMPOSITE PRODUCT MADE OF SHORT-FIBRE REINFORCED THERMOSETTING RESIN BY MEANS OF 3D PRINTING**
VERFAHREN ZUR HERSTELLUNG EINES VERBUNDPRODUKTS AUS KURZFASERVERSTÄRKTEM WÄRMEHÄRTENDEN HARZ MITTELS 3D-DRUCKEN
PROCÉDÉ DE FABRICATION DE PRODUIT COMPOSITE CONSTITUÉ DE RÉSINE THERMODURCISSABLE RENFORCÉE DE FIBRES COURTES À L'AIDE D'UNE IMPRESSION 3D

(30) Priority: 12.02.2015 CN 201510075179
(43) Date of publication of application: 20.12.2017
(73) Proprietor: Huazhong University of Science and Technology, Wuhan, Hubei 430074 (CN)
(72) Inventor: YAN, Chunze, Wuhan Hubei 430074 (CN); ZHU, Wei, Wuhan Hubei 430074 (CN); SHI, Yusheng, Wuhan Hubei 430074 (CN); LIU, Jie, Wuhan Hubei 430074 (CN)
(74) Representative: Lang, Christian
(86) International application number: PCT/CN2015/079374
(87) International publication number: WO 2016/127521

(56) References cited:
- WO-A1-02/055451
- CN-A- 1 752 238
- CN-A- 1 907 602
- CN-A- 1 970 202
- US-A1- 2002 149 137
- US-A1- 2013 323 473
- US-A1- 2014 050 921
- BRETT G. COMPTON ET AL: "3D-Printing of Lightweight Cellular Composites", ADVANCED MATERIALS, vol. 26, no. 34, 18 September 2014 (2014-09-18), pages 5930-5935, XP055210483, DE ISSN: 0935-9648, DOI: 10.1002/adma.201401804

## Description

The invention relates to the field of rapid prototyping, and more particularly to a selective laser sintering method.

As an important lightweight material, fiber reinforced thermosetting resin composites are widely utilized in aerospace, automotive, and other fields because of its excellent physical, chemical, and mechanical properties. It is an important route to realize the low weight of the transportation vehicles including planes and cars by substituting the extensively utilized metal materials by the composite product of the thermosetting epoxy resin/carbon glass with high strength and light weight. The latest Boeing 787 aircraft adopts a large area of the composite product of the thermosetting epoxy resin/carbon glass for the purpose of greatly saving the fuel and expand the scope of flight. In order to improve product performance, parts in aerospace, automotive, and other technical fields have more and more complicate structure, resulting in long manufacturing cycle, increase in the production cost, even forming disablement of some optimized structure of the conventional forming methods. The 3D printing technology (also known as material manufacturing or rapid prototyping), which adopts the successive layer manufacturing and stacking principle, can directly manufacturing a three-dimensional solid part from the CAD model. With the development of technology and the promotion of the industrial demand, 3D printing technology has been developed from the prototype to the development of direct products or near-product manufacturing, and the rapid shaping of complex structure is the biggest advantage of 3D printing technology.

US 2002/149137 A1 recites a method and a related apparatus for fabricating a three-dimensional (3D) object. The method includes providing a work surface; feeding a first layer of a photo-curable material to the work surface; directing a programmable planar light source to predetermined areas of the first layer to form a first cross-section of the 3D object; repeating the abovementioned steps to form successive layers; and removing unbonded power particles and uncured adhesive to reveal the 3D object.

US 2013/323473 A1 recites processes for fabricating secondary structures of gas turbine engines from polymer-based materials. The processes include an additive manufacturing technique which produces a secondary structure of a gas turbine engine having a 3D shape.

At present, the resin used in the fiber reinforced resin composite product of 3D printing is mainly thermoplastic resin and UV curing resin, and the following craft means are adopted: 1) thermoplastic resin powder (such as nylon, polyether ether ketone, and the like) and reinforced fiber powder are mixed, and the selected laser sintering are utilized; 2) composite wires or impregnating wire bunch is prepared by reinforced fiber and thermoplastic resin, and the fused deposition technology is utilized; and 3) the reinforced fiber and the UV curing resin are uniformly mixed, and the photocuring technology is utilized. However, products manufactured by the method 1) have low intensity, and the methods 2) and 3) are difficult to form the complicate products possessing cantilever structures.

Thermosetting resin is a reactive resin and needs to be cured with a curing agent for several hours at a specific curing temperature and pressure (chemical cross-linking) to form a stable network crosslinking. The thermosetting resin has relatively low viscosity, and the viscosity gradually increases with the progress of the curing reaction. According to the principle of the 3D printing, when the viscosity is too small, the shape of the material is difficult to be kept, and when the viscosity is too high, it is difficult to extrude the material out of a nozzle or heat and melt the material by the laser. Recently, the Harvard University has developed an epoxy resin suitable for 3D printing and realized the 3D printing of the thermosetting resin composite products by 3D extrusion for the first time (Compton,B.G. & Lewis,J.A., Adv Mater, 2014, 26,34). However, such method is restricted by the principle thereof, and is difficult to directly form complicate structures possessing cantilever structures. Thus, the current use of the 3D printing technology to produce the thermosetting resin and the composite products thereof still face many problems.

In view of the above-described problems, it is one objective of the invention to provide a method for manufacturing a composite product from a chopped fiber reinforced thermosetting resin. Following the method, composite products that have relatively high strength, complex structures, and high heat resistance can be manufactured.

To achieve the above objective, in accordance with one embodiment of the invention, there is provided a method for manufacturing a composite product. The method comprises the following steps:
1) preparing a composite powder comprising 10-50 v. % of a polymer adhesive and 50-90 v. % of a chopped fiber;
2) shaping the composite powder by using a selective laser sintering technology to yield a preform comprising pores, where, a porosity of the preform is 10%-60%, and a bending strength is higher than 0.3 megapascal;
3) placing the preform in a liquid thermosetting resin precursor for infiltration as a post treatment, which comprising:
   3.1) preparing a liquid thermosetting resin precursor having a viscosity of less than 100 mPa·s;
   3.2) immersing the preform into the liquid thermosetting resin precursor, allowing a liquid thermosetting resin of the liquid thermosetting resin precursor to infiltrate into the pores of the preform, and exposing an upper end of the preform out of a liquid surface of the liquid thermosetting resin precursor to discharge gas out of the pores of the preform;
4) collecting the preform from the liquid thermosetting resin precursor and curing the preform; and
5) polishing the preform obtained in 4) to yield a composite product.

In a class of this embodiment, a particle size of the composite powder in 1) is between 10 and 150 µm.

In a class of this embodiment, the chopped fiber in 1) has a diameter of 6-10 µm and a length of between 10 and 150 µm.

In a class of this embodiment, the selective laser sintering technology in 2) adopts the following parameters: a laser power of 5-15 W, a scanning velocity of 1500-3000 mm/s, a scanning interval of 0.08-0.15 mm, a thickness of a powder layer of 0.1-0.2 mm, and a preheating temperature of 50-200°C.

In a class of this embodiment, in 3.2), the preform and the liquid thermosetting resin precursor are placed in a vacuum drier and the vacuum drier is evacuated so as to facilitate the infiltration of the liquid thermosetting resin into the pores.

In a class of this embodiment, in 4), the curing treatment is carried out at 50-200°C for 3-48 hrs.

In a class of this embodiment, in 1), the polymer adhesive is a nylon 12, a nylon 6, a nylon 11, a polypropylene, an epoxy resin, and/or a phenolic resin.

In a class of this embodiment, in 1), the chopped fiber is a carbon fiber, a glass fiber, a boron fiber, a silicon carbide whisker, and/or an aramid fiber.

In a class of this embodiment, in 3.1), the liquid thermosetting resin adopted by the liquid thermosetting resin precursor is an epoxy resin, a phenolic resin, a polyurethane, a urea-formaldehyde resin, or an unsaturated polyester resin.

In a class of this embodiment, in 4), prior to curing the preform, excess resin is removed from a surface of the preform.

Advantages of the method for manufacturing the composite product from the chopped fiber reinforced thermosetting resin according to embodiments of the invention are summarized as follows:
1) The selective laser sintering technology is able to selectively sinter the powder of required regions of different layers respectively and stack the layers to form the part directly according to the CAD module, so as to directly manufacture parts with complicate shape and structure, for example, the structure possessing cantilevers. Compared with the conventional composite products of thermosetting resin, such as hand lay-up molding, compression molding, resin transfer molding, spray forming, and continuously filament winding process, the craft of the invention possess short design-manufacture cycle, no mold is required, and parts with complex structures can be integrally manufactured.
2) Compared with the composite products manufactured by conventional 3D printing, the thermosetting resin composite products of the invention possesses more excellent mechanical properties and better heat resistance.
3) The method of the invention has extensive application scope and is suitable to different reinforced fibers and different thermosetting resin systems.

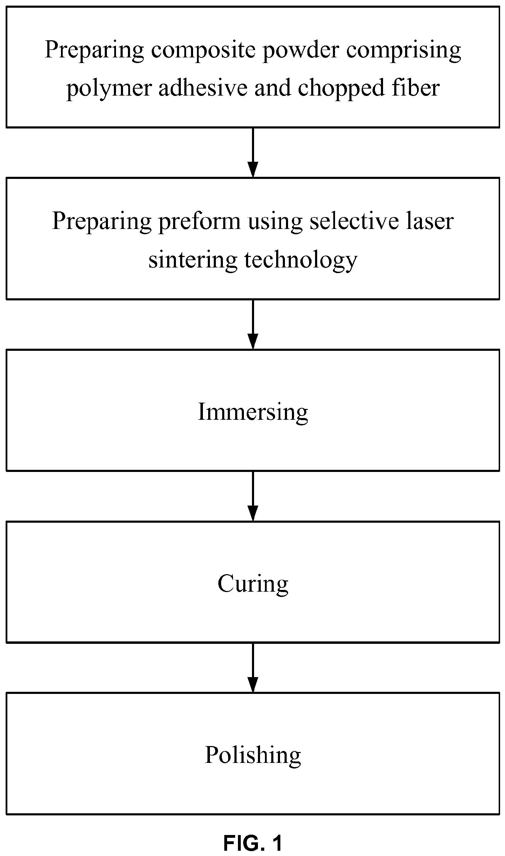

FIG. 1 is a flow chart of a method for manufacturing a composite product from a chopped fiber reinforced thermosetting resin.

For further illustrating the invention, experiments detailing a method for manufacturing a composite product from a chopped fiber reinforced thermosetting resin are described below. It should be noted that the following examples are intended to describe and not to limit the invention.

A method for manufacturing a composite product from a chopped fiber reinforced thermosetting resin is illustrated in FIG. 1. The method is summarized as follows:
1) A composite powder suitable for selective laser sintering technology is prepared. The composite powder comprises the following raw materials according to volume ratios: 10-50 v. % of a polymer adhesive and 50-90 v. % of a chopped fiber, in which, the composite powder comprising the polymer adhesive and the chopped fiber has a grain size of 10-150 µm, preferably 10-100 µm. Generally, the longer the fiber length is, the better the reinforced effect is, however, when the fiber length exceeds 150 µm, the quality of the powder layer is affected, and finally the accuracy of the parts is affected. Too short of the fiber results in enlargement of the surface area and therefore adherence to a roller. The volume percent of the polymer adhesive is preferably 10-30%, because on the premise of ensuring the basic strength of the preform, the less the content of the polymer adhesive is, the larger the porosity of the preform is, the more the resin infiltrated into the pores later, and the higher the final strength is.
   Furthermore, the polymer adhesive is polymer materials possessing a certain thermal resistance performance, and specifically is one selected from the group consisting of a nylon 12, a nylon 6, a nylon 11, a polypropylene, an epoxy resin, a phenolic resin, and a combination thereof.
   In addition, the chopped fiber is optionally a carbon fiber, a glass fiber, a boron fiber, a silicon carbide whisker, and/or an aramid fiber. The chopped fiber has a diameter of 6-10 µm, a length of between 10 and 150 µm, and preferably 50-100 µm. Generally, the longer the fiber length is, the better the reinforced effect is. But when the fiber length exceeds 150 µm, the quality of the powder layer will be affected.
2) The selective laser sintering technology is adopted to form a preform with pores. Optimized craft parameters of the selective laser sintering technology are adopted to prepare the preform of the part. The preform not only satisfies the strength requirement for the subsequent treatment, but also exists with a porous structure including a large quantity of communicating channels.
   In order to satisfy the strength requirement for the subsequent treatment, a bending strength of the preform exceeds 0.3 megapascal. When the strength is too low, some parts with thin walls will be easily destructed. In the meanwhile, communicating channels are required in the preform to make the resin infiltrated into the preform. The higher the porosity is, the more the resin is infiltrated, and the better the final property is. Generally, the porosity is required to be 10-60%. When the porosity is too low, the resin infiltrated is too little, and the final part has low strength. When the porosity is too high, the strength of the elementary preform is low, which is unable to satisfy the requirements for the subsequent treatment.
   Besides, the craft parameters for formation using the selective laser sintering technology are as follows: a laser power of 5-15 W, a scanning velocity of 1500-3000 mm/s, a scanning interval of 0.08-0.15 mm, a thickness of a powder layer of 0.1-0.2 mm, and a preheating temperature of 50-200°C. Specific craft parameters are determined according to the classifications of the polymer adhesive and the chopped fibers in the practical processing.
3) The preform is placed in a liquid thermosetting resin precursor for infiltration as a post treatment. The post treatment is carried out as follows:
   3.1) The viscosity is regulated by raising the temperature or adding an adhesive to prepare the liquid thermosetting resin precursor having the viscosity of smaller than 100 mPa·s, because if the viscosity is too large, the resistance of the liquid flowing increases, which restricts the infiltration of the resin. The liquid thermosetting resin precursor is prepared in a resin box. The thermosetting resin adopted by the liquid thermosetting resin precursor is an epoxy resin, a phenolic resin, a polyurethane, a urea-formaldehyde resin, or an unsaturated polyester resin which can be processed into the liquid precursor having viscosity of smaller than 50 mPa·s and can be fluently infiltrated into the pores of the elementary preform.
   3.2) The preform is immersed into the liquid thermosetting resin precursor to infiltrate the liquid thermosetting resin into the pores of the preform, and an upper end of the preform is kept above the liquid level to discharge the gas out of the pores of the preform. The infiltration process is carried out in air. Preferably, the infiltration process is carried out in vacuum: the resin box accommodating the preform and the liquid thermosetting resin precursor is placed in the vacuum drier and the vacuum drier is evacuated to facilitate the infiltration of the liquid thermosetting resin into the pores of the preform.
4) After total infiltration, the preform is taken out from the liquid thermosetting resin precursor, cleaned by brushing superfluous resin by a brush or scrapping the superfluous resin by a scrapper, then cured. Preferably, the curing is performed at 50-200°C for 3-48 hrs.
5) The preform obtained in 4) is polished to yield a composite product.

In summary, a general idea of the invention includes the following two respects: one is that the selective laser sintering technology is adopted to form the enhanced skeleton preform adhered by polymers and possessing high porosity. The other is that the preform is then performed with infiltration of thermosetting resin and high-temperature curing for crosslinking to obtain the composite product from a chopped fiber reinforced thermosetting resin.

### Example 1

1) The solvent precipitation is adopted to prepare the composite powder comprising the nylon 12 and the chopped carbon fibers, in which the nylon 12 accounts for 20 v. %, and the powder having a grain size of 10-100 µm is screened for shaping using the selective laser sintering.
2) The selective laser sintering technology is adopted to form the preform with pores. Craft parameters for the selective laser sintering technology are as follows: a laser power of 5 W, a scanning velocity of 2000 mm/s, a scanning interval of 0.1 mm, a thickness of a powder layer of 0.1 mm, and a preheating temperature of 168°C. The preform of the composite product of nylon 12/carbon fibers is shaped, and it is known from tests that the bending strength of the preform is 1.5 megapascal and the porosity thereof is 58%.
3) A phenolic epoxy resin F-51 and a curing agent methylnadic anhydride are mixed according to a ratio of 100:91, and a curing accelerator 2,4,6-tris (dimethylaminomethyl) phenol (short for DMP-30) having a weight accounting for 0.1 wt. % of the epoxy resin is added, heated to 130°C, and intensively stirring a mixture to be uniform. A viscosity of the infiltration system is regulated to be 20 mPa·s. The phenolic epoxy resin F-51 is a product provided by Yueyang Baling Petrochemical Co., Ltd. The methylnadic anhydride and DMP-30 are products provided by the Shanghai Chengyi Hi-tech Development Co., Ltd.
4) The resin box is placed in the vacuum drier, and the preform is directly immersed into the precursor solution during which the upper end of the preform is kept above the liquid level to discharge the gas out of the preform via the upper end thereof during the infiltration process. The vacuum drier is then evacuated to accelerate the resin to infiltrate into the preform. The preform after infiltration is taken out and the superfluous resin on the surface is cleaned.
5) The part after the infiltration is placed in the oven for curing. The curing is performed respectively at 150°C for 5 hrs and 200°C for another 5 hrs. The part is taken out from the oven after being cooled, and a surface of the part is then polished to obtain the composite product from a carbon fiber reinforced phenolic epoxy resin.

### Example 2

1) The solvent precipitation is adopted to prepare the composite powder comprising the nylon 12 and the chopped glass fibers, in which the nylon 12 accounts for 25 v. %, and the powder having a grain size of 20-150 µm is screened for shaping using the selective laser sintering.
2) The selective laser sintering technology is adopted to form the preform with pores. Craft parameters for the selective laser sintering technology are as follows: a laser power of 8 W, a scanning velocity of 2500 mm/s, a scanning interval of 0.1 mm, a thickness of a powder layer of 0.15 mm, and a preheating temperature of 168°C. The preform of the composite product of nylon 12/glass fibers is shaped, and it is known from tests that the bending strength of the preform is 2.0 megapascal and the porosity thereof is 53%.
3) An epoxy resin CYD-128 and a curing agent 2,3,6-tetrahydro-3-methylphthalic anhydride are mixed according to a ratio of 100:85, and a curing accelerator 2,4,6-tris (dimethylaminomethyl) phenol (short for DMP-30) having a weight accounting for 0.1 wt. % of the epoxy resin is added, heated to 110°C, and intensively stirring a mixture to be uniform. A viscosity of the infiltration system is regulated to be 30 mPa·s. The epoxy resin CYD-128 is a product provided by Yueyang Baling Petrochemical Co., Ltd. The 2,3,6-tetrahydro-3-methylphthalic anhydride and DMP-30 are products provided by the Shanghai Chengyi Hi-tech Development Co., Ltd.
4) The resin box is placed in the vacuum drier, and the preform is directly immersed into the precursor solution during which the upper end of the preform is kept above the liquid level to discharge the gas out of the preform via the upper end thereof during the infiltration process. The vacuum drier is then evacuated to accelerate the resin to infiltrate into the preform. The preform after infiltration is taken out and the superfluous resin on the surface is cleaned.
5) The part after the infiltration is placed in the oven for curing. The curing is performed respectively at 130°C for 3 hrs, 150°C for 5 hrs, and 200°C for 10 hrs. The part is taken out from the oven after being cooled, and a surface of the part is then polished to obtain the composite product from a glass fiber reinforced epoxy resin.

### Example 3

1) The mechanical mixing is adopted to prepare the composite powder comprising the polypropylene and the chopped aromatic polyamide fibers, in which the polypropylene accounts for 30 v. %, and the powder having a grain size of 10-80 µm is screened for shaping using the selective laser sintering.
2) The selective laser sintering technology is adopted to form the preform with pores. Craft parameters for the selective laser sintering technology are as follows: a laser power of 11 W, a scanning velocity of 2500 mm/s, a scanning interval of 0.1 mm, a thickness of a powder layer of 0.1 mm, and a preheating temperature of 105°C. The preform of the composite product of polypropylene/aromatic polyamide fibers is shaped, and it is known from tests that the bending strength of the preform is 1.3 megapascal and the porosity thereof is 43%.
3) Unsaturated polyester resin and a curing agent methyl ethyl ketone peroxide are mixed according to a ratio of 100:1, and a curing accelerator cobalt naphthenate having a weight accounting for 0.1 wt. % of the epoxy resin is added, heated to 45°C, and intensively stirring a mixture to be uniform. A viscosity of the infiltration system is regulated to be 30-40 mPa·s. The unsaturated polyester resin is a product of Synolite 4082-G-33N provided by Jinling DSM Resin Co., Ltd. The methyl ethyl ketone peroxide is a product provided by Jiangyin City Forward Chemical Co., Ltd. The cobalt naphthenate is commercially available.
4) The resin box is placed in the vacuum drier, and the preform is directly immersed into the precursor solution during which the upper end of the preform is kept above the liquid level to discharge the gas out of the preform via the upper end thereof during the infiltration process. The vacuum drier is then evacuated to accelerate the resin to infiltrate into the preform. The preform after infiltration is taken out and the superfluous resin on the surface is cleaned.
5) The part after the infiltration is placed in the oven for curing. The curing is performed at 100°C for 24 hrs. The part is taken out from the oven after being cooled, and a surface of the part is then polished to obtain the composite product from an aromatic polyamide fiber reinforced epoxy resin.

### Example 4

1) The mechanical mixing is adopted to prepare the composite powder comprising the nylon 11 and the chopped boron fibers, in which the nylon 11 accounts for 25 v. %, and the powder having a grain size of 10-100 µm is screened for shaping using the selective laser sintering.
2) The selective laser sintering technology is adopted to form the preform with pores. Craft parameters for the selective laser sintering technology are as follows: a laser power of 11 W, a scanning velocity of 2000 mm/s, a scanning interval of 0.1 mm, a thickness of a powder layer of 0.15 mm, and a preheating temperature of 190°C. An elementary preform of the composite product of nylon 11/boron fibers is shaped, and it is known from tests that the bending strength of the preform is 0.8 megapascal and the porosity thereof is 48%.
3) A phenolic resin solution is prepared by phenolic resin and alcohol according to a weight ratio of 1:1, the phenolic resin solution is placed in a water bath at a constant temperature and heated to 40-60°C, and a viscosity of the infiltration system is regulated to less than 50 mpa·s. The phenolic resin is a boron-modified phenolic resin with a product number of THC-400 provided by Xi'an Taihang flame retardant Co., Ltd. The alcohol is commercially available.
4) The preform is directly immersed into the precursor solution during which the upper end of the preform is kept above the liquid level to discharge the gas out of the preform via the upper end thereof during the infiltration process. The infiltration is carried out for several times until the porous structures are totally filled. The vacuum drier is then evacuated to accelerate the resin to infiltrate into the preform. The preform after infiltration is taken out and the superfluous resin on the surface is cleaned.
5) The part after the infiltration is placed in the oven for curing. The curing is performed at 180°C for 24 hrs. The part is taken out from the oven after being cooled, and a surface of the part is then polished to obtain the composite product from a boron fiber reinforced phenolic resin.

### Example 5

1) The mechanical mixing is adopted to prepare the composite powder comprising the nylon 6 and the chopped silicon carbide whiskers, in which the nylon 6 accounts for 50 v. %, and the powder having a grain size of 10-100 µm is screened for shaping using the selective laser sintering.
2) The selective laser sintering technology is adopted to form the preform with pores. Craft parameters for the selective laser sintering technology are as follows: a laser power of 15 W, a scanning velocity of 1500 mm/s, a scanning interval of 0.08 mm, a thickness of a powder layer of 0.2 mm, and a preheating temperature of 200°C. The preform of the composite product of nylon 6/silicon carbide whiskers is shaped, and it is known from tests that the bending strength of the preform is 1.6 megapascal and the porosity thereof is 60%.
3) Isocyanate and polyhydric alcohol are two primary parts of the polyurethane thermosetting resin. Polyether polyol, polyarylpolymethylene-isocyanate (PAPI), stannous octoate, triethanolamine, and water are uniformly mixed according to weight ratio of 100: 100: 0.4: 0.6: 0.1, and heated to 40°C. The viscosity is regulated to less than 100 mPa·s to obtain a polyurethane thermosetting resin precursor.
4) The resin box is placed in the vacuum drier, and the preform is directly immersed into the precursor solution during which the upper end of the preform is kept above the liquid level to discharge the gas out of the preform via the upper end thereof during the infiltration process. The vacuum drier is then evacuated to accelerate the resin to infiltrate into the preform. The preform after infiltration is taken out and the superfluous resin on the surface is cleaned.
5) The part after the infiltration is placed in the oven for curing. The curing is performed at 100°C for 24 hrs. The part is taken out from the oven after being cooled, and a surface of the part is then polished to obtain the composite product from a silicon carbide whisker reinforced polyurethane resin.

### Example 6

1) The mechanical mixing is adopted to prepare the composite powder comprising the epoxy resin and the chopped glass fibers, in which the epoxy resin accounts for 10 v. %, and the powder having a grain size of 10-100 µm is screened for shaping using the selective laser sintering.
2) The selective laser sintering technology is adopted to form the preform with pores. Craft parameters for the selective laser sintering technology are as follows: a laser power of 8 W, a scanning velocity of 3000 mm/s, a scanning interval of 0.15 mm, a thickness of a powder layer of 0.1 mm, and a preheating temperature of 50°C. The preform of the composite product of epoxy resin/glass fibers is shaped, and it is known from tests that the bending strength of the preform is 0.8 megapascal and the porosity thereof is 57%.
3) A urea-formaldehyde resin precursor with low viscosity is synthesized according to the alkali-acid-alkali means. Firstly, 8 g of hexamethylenetetramine is added to 500 mL of a 36% methanol solution, the temperature is increased to 55°C by an oil bath, and 50 g of a first batch of urea is added for carrying out reaction for 60 min. The temperature is increased to 90°C, and a 70 g of a second batch of urea is added for reaction for 40 min, during which 20% sodium hydrate is added to regulate a pH value to 5-6. After the reaction, the pH value is regulated to 7-8, and 20 g of a third batch of urea is added for reaction for 20 min, and the pH value is regulated to 7-8 before the reaction is finished. Thus, a urea-formaldehyde rein precursor with low viscosity is yielded.
4) The resin box is placed in the vacuum drier, and the preform is directly immersed into the precursor solution during which the upper end of the preform is kept above the liquid level to discharge the gas out of the preform via the upper end thereof during the infiltration process. The vacuum drier is then evacuated to accelerate the resin to infiltrate into the preform. The preform after infiltration is taken out and the superfluous resin on the surface is cleaned.
5) The part after the infiltration is placed in the oven for curing. The curing is performed at 50°C for 48 hrs. The part is taken out from the oven after being cooled, and a surface of the part is then polished to obtain the composite product from a glass fiber reinforced urea-formaldehyde resin.

Unless otherwise indicated, the numerical ranges involved in the invention include the end values. While particular embodiments of the invention have been shown and described, it will be obvious to those skilled in the art that changes and modifications may be made without departing from the invention in its broader aspects, and therefore, the aim in the appended claims is to cover all such changes and modifications as fall within the scope of the invention without departing from the scope of the appended claims.

## Claims

1. A method for manufacturing a composite product from a chopped fiber reinforced thermosetting resin, wherein
the method comprises:
1) preparing a composite powder comprising 10-50 v. % of a polymer adhesive and 50-90 v. % of a chopped fiber;
2) shaping the composite powder by using selective laser sintering to yield a preform comprising pores, wherein the selective laser sintering adopts the following process parameters: a laser power of 5-15 W, a scanning velocity of 1500-3000 mm/s, a scanning interval of 0.08-0.15 mm, a thickness of a powder layer of 0.1-0.2 mm, and a preheating temperature of 50-200°C; a porosity of the preform is 10%-60%; and a bending strength of the preform is higher than 0.3 megapascal;
3) placing the preform in a liquid thermosetting resin precursor for infiltration as a post treatment, the post treatment comprising:
3.1) preparing the liquid thermosetting resin precursor having a viscosity of less than 100 mPa·s;
3.2) immersing the preform into the liquid thermosetting resin precursor, allowing a liquid thermosetting resin of the liquid thermosetting resin precursor to infiltrate into the pores of the preform, and exposing an upper end of the preform out of a liquid surface of the liquid thermosetting resin precursor to discharge gas out of the pores of the preform;
4) collecting the preform from the liquid thermosetting resin precursor and curing the preform; and
5) polishing the preform obtained in 4) to yield the composite product.

2. The method of claim 1, wherein a particle size of the composite powder in 1) is between 10 and 150 µm.

3. The method of claim 1, wherein the chopped fiber in 1) has a diameter of 6-10 µm and a length of between 10 and 150 µm.

4. The method of claim 1, wherein in 3.2), the preform and the liquid thermosetting resin precursor are placed in a vacuum drier and the vacuum drier is evacuated.

5. The method of claim 1, wherein 4) comprises curing the preform at 50-200°C for 3-48 hrs.

6. The method of claim 1, wherein in 1), the polymer adhesive is a nylon 12, a nylon 6, a nylon 11, a polypropylene, an epoxy resin, and/or a phenolic resin.

7. The method of claim 1, wherein in 1), the chopped fiber is a carbon fiber, a glass fiber, a boron fiber, a silicon carbide whisker, and/or an aramid fiber.

8. The method of claim 1, wherein in 3.1), the liquid thermosetting resin adopted by the liquid thermosetting resin precursor is an epoxy resin, a phenolic resin, a polyurethane, a urea-formaldehyde resin, or an unsaturated polyester resin.

9. The method of claim 1, wherein in 4), prior to curing the preform, excess resin is removed from a surface of the preform.

## Patentansprüche

1. Verfahren zur Herstellung eines Verbundprodukts aus einem mit geschnittenen Fasern verstärkten wärmehärtenden Harz, wobei das Verfahren umfasst:
1) Herstellen eines Verbundpulvers, das 10 bis 50 Vol.-% eines Polymerklebstoffs und 50 bis 90 Vol.-% einer geschnittenen Faser umfasst;
2) Formen des Verbundpulvers unter Verwendung von selektivem Lasersintern, um einen Vorformling zu erhalten, der Poren umfasst, wobei das selektive Lasersintern die folgenden Prozessparameter anwendet: eine Laserleistung von 5 bis 15 W, eine Scangeschwindigkeit von 1.500 bis 3.000 mm/s, ein Scanning-Intervall von 0,08 bis 0,15 mm, eine Dicke einer Pulverschicht von 0,1 bis 0,2 mm und eine Vorheiztemperatur von 50 bis 200 °C; eine Porosität des Vorformlings beträgt 10 % bis 60 %; und eine Biegefestigkeit des Vorformlings ist höher als 0,3 Megapascal;
3) Platzieren des Vorformlings in einem flüssigen wärmehärtenden Harzvorläufer zur Infiltration als eine Nachbehandlung, wobei die Nachbehandlung umfasst:
3.1) Herstellen des flüssigen wärmehärtenden Harzvorläufers, der eine Viskosität von weniger als 100 mPa s aufweist;
3.2) Eintauchen des Vorformlings in den flüssigen wärmehärtenden Harzvorläufer, Ermöglichen des Infiltrierens eines flüssigen wärmehärtenden Harzes des flüssigen wärmehärtenden Harzvorläufers in die Poren des Vorformlings und Exponieren eines oberen Endes des Vorformlings aus einer flüssigen Oberfläche des flüssigen wärmehärtenden Harzvorläufers, um Gas aus den Poren des Vorformlings abzugeben;
4) Entnehmen des Vorformlings aus dem flüssigen wärmehärtenden Harzvorläufer und Aushärten des Vorformlings; und
5) Polieren des unter 4) erhaltenen Vorformlings, um das Verbundprodukt zu erhalten.

2. Verfahren nach Anspruch 1, wobei eine Partikelgröße des Verbundpulvers in 1) zwischen 10 und 150 µm liegt.

3. Verfahren nach Anspruch 1, wobei die geschnittene Faser in 1) einen Durchmesser von 6 bis 10 µm und eine Länge zwischen 10 und 150 µm aufweist.

4. Verfahren nach Anspruch 1, wobei in 3.2) der Vorformling und der flüssige wärmehärtende Harzvorläufer in einen Vakuumtrockner eingebracht werden und der Vakuumtrockner evakuiert wird.

5. Verfahren nach Anspruch 1, wobei 4) das Härten des Vorformlings bei 50 bis 200 °C für 3 bis 48 Stunden umfasst.

6. Verfahren nach Anspruch 1, wobei in 1) der Polymerklebstoff ein Nylon-12, ein Nylon-6, ein Nylon-11, ein Polypropylen, ein Epoxidharz und/oder ein Phenolharz ist.

7. Verfahren nach Anspruch 1, wobei in 1) die geschnittene Faser eine Kohlenstofffaser, eine Glasfaser, eine Borfaser, ein Siliziumkarbid-Whisker und/oder eine Aramidfaser ist.

8. Verfahren nach Anspruch 1, wobei in 3.1) das flüssige wärmehärtende Harz, das von dem flüssigen wärmehärtenden Harzvorläufer angenommen wird, ein Epoxidharz, ein Phenolharz, ein Polyurethan, ein Harnstoff-Formaldehydharz oder ein ungesättigtes Polyesterharz ist.

9. Verfahren nach Anspruch 1, wobei in 4) vor dem Härten des Vorformlings überschüssiges Harz von einer Oberfläche des Vorformlings entfernt wird.

## Revendications

1. Procédé de fabrication d'un produit composite à partir d'une résine thermodurcissable renforcée de fibres coupées, dans lequel le procédé comprend :
1) la préparation d'une poudre composite comprenant de 10 à 50 % en volume d'un polymère adhésif et de 50 à 90 % en volume d'une fibre coupée ;
2) la mise en forme de la poudre composite en utilisant un frittage laser sélectif pour donner une préforme comprenant des pores, dans lequel le frittage laser sélectif adopte les paramètres de traitement suivants : une puissance laser de 5 à 15 W, une vitesse de balayage de 1 500 à 3 000 mm/s, un intervalle de balayage de 0,08 à 0,15 mm, une épaisseur d'une couche de poudre de 0,1 à 0,2 mm et une température de préchauffage de 50 à 200 °C ; une porosité de la préforme est de 10 % à 60 % ; et une résistance à la flexion de la préforme est supérieure à 0,3 mégapascal ;
3) le placement de la préforme dans un précurseur de résine thermodurcissable liquide pour la réalisation d'une infiltration en tant que post-traitement, le post-traitement comprenant :
3.1) la préparation d'un précurseur de résine thermodurcissable liquide ayant une viscosité inférieure à 100 mPa.S ;
3.2) l'immersion de la préforme dans le précurseur de résine thermodurcissable liquide, permettant l'infiltration d'une résine thermodurcissable liquide du précurseur de résine thermodurcissable liquide dans les pores de la préforme, et l'exposition d'une extrémité supérieure de la préforme hors d'une surface de liquide du précurseur de résine thermodurcissable liquide pour rejeter le gaz hors des pores de la préforme ;
4) la collecte de la préforme du précurseur de résine thermodurcissable liquide et le durcissement de la préforme ; et
5) le polissage de la préforme obtenue en 4) pour donner le produit composite.

2. Procédé selon la revendication 1, dans lequel une taille de particules de la poudre composite en 1) est comprise entre 10 et 150 µm.

3. Procédé selon la revendication 1, dans lequel la fibre coupée en 1) a un diamètre de 6 à 10 µm et une longueur comprise entre 10 et 150 µm.

4. Procédé selon la revendication 1, dans lequel en 3.2), la préforme et le précurseur de résine thermodurcissable liquide sont placés dans un séchoir à vide et le séchoir à vide est mis sous vide.

5. Procédé selon la revendication 1, dans lequel le 4) comprend le durcissement de la préforme à 50 à 200 °C pendant 3 à 48 h.

6. Procédé selon la revendication 1, dans lequel en 1), l'adhésif polymère est un nylon 12, un nylon 6, un nylon 11, un polypropylène, une résine époxy, et/ou une résine phénolique.

7. Procédé selon la revendication 1, dans lequel en 1), la fibre coupée est une fibre de carbone, une fibre de verre, une fibre de bore, une trichite de carbure de silicium, et/ou une fibre d'aramide.

8. Procédé selon la revendication 1, dans lequel en 3.1), la résine thermodurcissable liquide adoptée par le précurseur de résine thermodurcissable liquide est une résine époxy, une résine phénolique, un polyuréthane, une résine urée-formaldéhyde, ou une résine polyester insaturée.

9. Procédé selon la revendication 1, dans lequel en 4), avant le durcissement de la préforme, la résine en excès est retirée d'une surface de la préforme.
